# EUROPEAN PATENT SPECIFICATION

(11) **EP 2 742 690 B1**
(45) Date of publication and mention of the grant of the patent: **27.07.2016**
(21) Application number: 12748112.5
(22) Date of filing: 08.08.2012
(51) Int. Cl.: H04N 19/176, H04N 19/119, H04N 19/157

(54) **RESIDUAL TREE STRUCTURE OF TRANSFORM UNIT PARTITIONING**
RESTBAUMSTRUKTUR DER PARTITIONIERUNG EINER TRANSFORMATIONSEINHEIT
STRUCTURE ARBORESCENTE RÉSIDUELLE D'UN PARTITIONNEMENT D'UNITÉS DE TRANSFORMATION

(30) Priority: 08.08.2011 US 201161515978 P; 08.08.2012 US 201213570098
(43) Date of publication of application: 18.06.2014
(73) Proprietor: Google Technology Holdings LLC, Mountain View, CA 94043 (US)
(72) Inventor: WANG, Limin, San Diego, California 92128 (US); FANG, Xue, San Diego, California 92127 (US); KIM, Jae Hoon, Santa Clara, California 95051 (US); KUNG, Wei-Ying, San Diego, California 92130 (US); PANUSOPONE, Krit, San Diego, California 92130 (US)
(74) Representative: Boult Wade Tennant
(86) International application number: PCT/US2012/050042
(87) International publication number: WO 2013/023005

(56) References cited:
- US-A- 5 122 873
- US-A1- 2003 202 602
- KRIT PANUSOPONE ET AL: "Efficient transform unit representation", 4. JCT-VC MEETING; 95. MPEG MEETING; 20-1-2011 - 28-1-2011; DAEGU;(JOINT COLLABORATIVE TEAM ON VIDEO CODING OF ISO/IEC JTC1/SC29/WG11AND ITU-T SG.16 ); URL: HTTP://WFTP3.ITU.INT/AV-ARCH/JCTVC-SITE/,, no. JCTVC-D250, 15 January 2011 (2011-01-15), XP030008290, ISSN: 0000-0013
- MCCANN K ET AL: "HEVC Test Model 3 (HM 3) Encoder Description", 20110329, no. JCTVC-E602, 29 March 2011 (2011-03-29) , XP030009013, ISSN: 0000-0003
- YUAN (TSINGHUA) Y ET AL: "CE2: Non-Square Quadtree Transform for symmetric and asymmetric motion partitions", 6. JCT-VC MEETING; 97. MPEG MEETING; 14-7-2011 - 22-7-2011; TORINO; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-F412, 12 July 2011 (2011-07-12), XP030009435,
- PANUSOPONE K ET AL: "JCT-VC AHG report: Coding block structures", 20110314, no. JCTVC-E007, 14 March 2011 (2011-03-14) , XP030008521, ISSN: 0000-0007
- LIU S ET AL: "Evaluations and Suggestions about TU Representation", 20110309, no. JCTVC-E083, 9 March 2011 (2011-03-09), XP030008589, ISSN: 0000-0007
- TAN Y H ET AL: "RQT depth selection", 96. MPEG MEETING; 21-3-2011 - 25-3-2011; GENEVA; (MOTION PICTURE EXPERT GROUP OR ISO/IEC JTC1/SC29/WG11),, no. m19619, 20 March 2011 (2011-03-20), XP030048186,
- PANUSOPONE (MOTOROLA MOBILITY) K ET AL: "Evaluation of RQT in HM and related TU representation", 5. JCT-VC MEETING; 96. MPEG MEETING; 16-3-2011 - 23-3-2011; GENEVA;(JOINT COLLABORATIVE TEAM ON VIDEO CODING OF ISO/IEC JTC1/SC29/WG11AND ITU-T SG.16 ); URL: HTTP://WFTP3.ITU.INT/AV-ARCH/JCTVC-SITE/,, no. JCTVC-E365, 11 March 2011 (2011-03-11) , XP030008871, ISSN: 0000-0005

## Description

### BACKGROUND

Video compression systems employ block processing for most of the compression operations. A block is a group of neighboring pixels and may be treated as one coding unit in term s of the compression operations. Theoretically, a larger coding unit is preferred to take advantage of correlation among immediate neighboring pixels. Various video compression standards, e.g., Motion Picture Expert Group (MPEG)-1, MPEG-2, and MPEG-4, use block sizes of 4x4, 8x8, and 16x16 (referred to as a macroblock (MB)). The standards typically use a fixed transform size (e.g., 4x4 or 8x8) in a macro block. However, if more than one transform size is used, then a macroblock level parameter may be required to indicate which transform size to use. Including this parameter increases the overhead as the macroblock level parameter needs to be encoded.

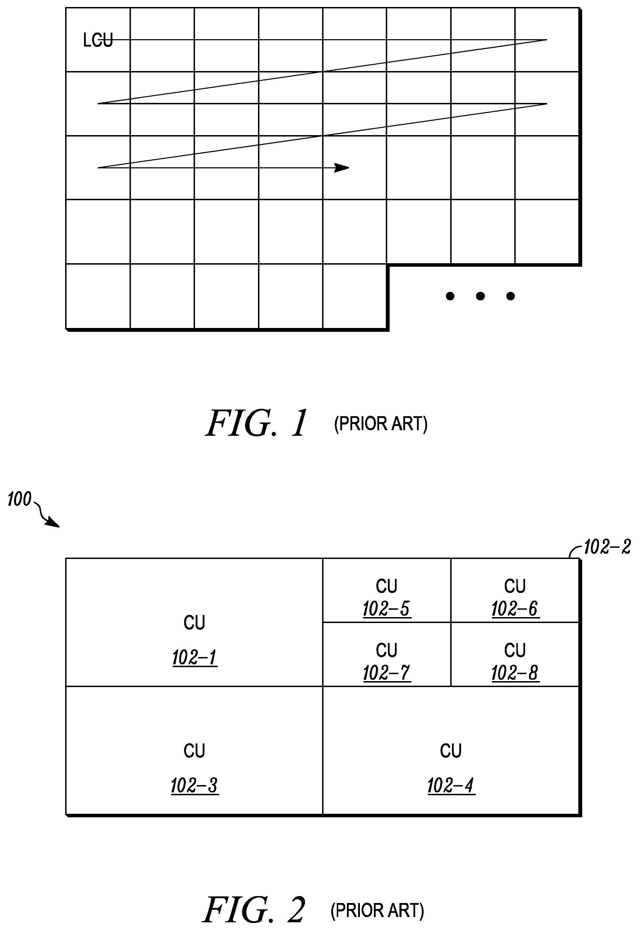

High efficiency video coding (HEVC) is also a block-based hybrid spatial and temporal predictive coding scheme. HEVC partitions an input picture into square blocks referred to as largest coding units (LCUs) as shown in FIG. 1. Each LCU can be partitioned into smaller square blocks called coding units (CUs). FIG. 2 shows an example of an LCU partition of CUs. An LCU 100 is first partitioned into four CUs 102. Each CU 102 may also be further split into four smaller CUs 102 that are a quarter of the size of the CU 102. This partitioning process can be repeated based on certain criteria, such as limits to the number of times a CU can be partitioned may be imposed. As shown, CUs 102-1, 102-3, and 102-4 are a quarter of the size of LCU 100. Further, a CU 102-2 has been split into four CUs 102-5, 102-6, 102-7, and 102-8.

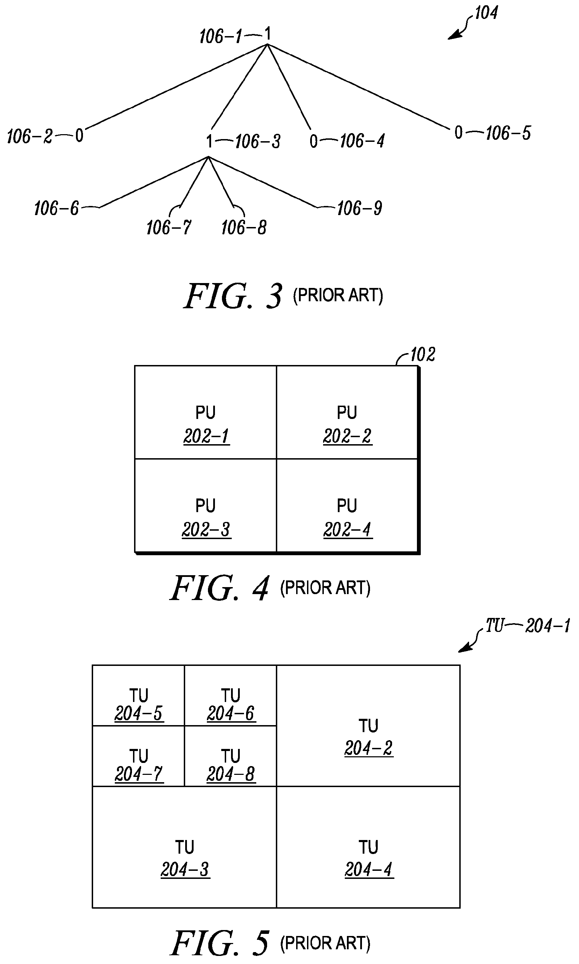

A quadtree data representation is used to describe how LCU 100 is partitioned into CUs 102. FIG. 3 shows a quadtree 104 of a LCU partition . Each node of quadtree 104 is assigned a flag of "1" if the node is further split into four sub-nodes and assigned a flag of "0" if the node is not split. The flag is called a split bit (e.g. 1) or stop bit (e.g., 0) and is coded in a compressed bitstream.

A node 106-1 includes a flag "1" at a top CU level because LCU 100 is split into 4 CUs. At an intermediate CU level, the flags indicate whether a CU 102 is further split into four CUs. In this case, a node 106-3 includes a flag of "1" because CU 102-2 has been split into four CUs 102-5-102-8. Nodes 106-2, 106-4, and 106-5 include a flag of "0" because these CUs 102 are not split. Nodes 106-6, 106-7, 106-8, and 106-9 are at a bottom CU level and hence, no flag bit of "0" or '1" is necessary for those nodes because corresponding CUs 102-5 - 102-8 are not split. The quadtree data representation for quadtree 104 shown in FIG. 3 may be represented by the binary data of "10100", where each bit represents a node 106 of quadtree 104. The binary data indicates the LCU partitioning to the encoder and decoder, and this binary data needs to be coded and transmitted as overhead.

HEVC uses a block transform of either a square or non-square. Each CU 102 may include one or more prediction units (PUs). The PUs may be used to perform spatial prediction or temporal prediction.

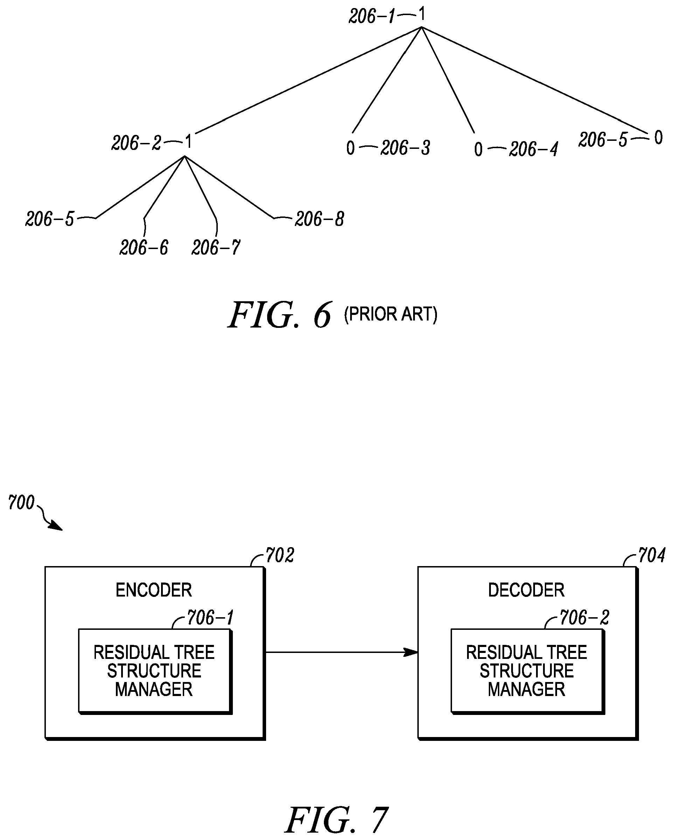

FIG. 4 shows an example of a CU partition of PUs. As shown, a CU 102 has been partitioned into four PUs 202-1 - 202-4. Unlike prior standards where only one transform of 8x8 or 4x4 is applied to a macroblock, a set of block transforms of different sizes may be applied to a CU 102. For example, the CU partition of PUs 202 shown in FIG. 4 may be associated with a set of transform units (TUs) 204 shown in FIG. 5. In FIG. 5, PU 202-1 is partitioned into four TUs 204-5 - 204-8. Also, TUs 204-2, 204-3, and 204-4 are the same size as corresponding PUs 202-2 - 202-4. Because the size and location of each block transform within a CU may vary, another quadtree data representation, referred to as a residual quadtree (RQT), is needed to describe the TU partitioning. FIG. 6 shows an example of an RQT. The RQT is derived in a similar fashion as described with respect to quadtree 104 for the LCU partitioning. For example, each node of the RQT may include a flag of "1" if CU 102 is split into more than one TU 204. A node 206-1 includes a flag of "1" because CU 102 is split into four TUs 204. Also, node 206-2 has a flag of "1" because TU 204-1 is split into four TUs 204-5 - 204-8. All other nodes 206 have a flag of "0" because TUs 204-2, 204-3, and 204-4 are not split. For the RQT data representation, binary data of "11000" also has to be encoded and transmitted as overhead.

The RQT branches each node into four other nodes. Whenever a TU is partitioned, the TU is partitioned into four TUs. This requires a quadtree representation, which includes four branches for each node that is split. Having four branches increases the amount of data that needs to be encoded and transmitted. Further, partitioning into four TUs may not efficiently represent motion information.

### SUMMARY

In one embodiment, a method includes receives a prediction unit (PU) for a coding unit (CU) of video content. The PU is partitionable into a plurality of PU partition types. The method determines a PU partition type for the PU and a residual tree structure based on the PU partition type for partitioning of the CU into transform units (TUs). The residual tree includes a binary partition of a node into two TUs. A TU partition for the PU partition type is determined based on the residual tree structure and a desired level of partitioning in the residual tree structure. The method then uses the TU partition in a transform operation.

In one embodiment, an apparatus is provided comprising: one or more computer processors; and a computer-readable storage medium comprising instructions, that when executed, control the one or more computer processors to be configured for: receiving a prediction unit (PU) for a coding unit (CU) of video content, wherein the PU is partitionable into a plurality of PU partition types; determining a PU partition type for the PU; determining a residual tree structure based on the PU partition type for partitioning of the CU into transform units (TUs), the residual tree including a binary partition of a node into two TUs; determining a TU partition for the PU partition type based on the residual tree structure and a desired level of partitioning in the residual tree structure; and using the TU partition in a transform operation..

In one embodiment, a method is provided for decoding video content, the method comprising: receiving a bitstream of encoded video content; determining, by a computing device, a prediction unit (PU) partition type for a PU for a coding unit (CU) of the video content, wherein the PU is partitionable into a plurality of PU partition types; determining, by the computing device, a residual tree structure based on the PU partition type for partitioning of the CU into transform units (TUs), the residual tree including a binary partition of a node into two TUs; determining, by the computing device, a TU partition for the PU partition type based on the residual tree structure and a desired level of partitioning in the residual tree structure; and using the TU partition in a transform operation in decoding the video content.

In one embodiment, an apparatus configured to decode video content is provided comprising: one or more computer processors; and a non-transitory computer-readable storage medium comprising instructions, that when executed by the one or more computer processors, control the one or more computer processors to be configured for: receiving a bitstream of encoded video content; determining a prediction unit (PU) partition type for a PU for a coding unit (CU) of the video content, wherein the PU is partitionable into a plurality of PU partition types; determining a residual tree structure based on the PU partition type for partitioning of the CU into transform units (TUs), the residual tree including a binary partition of a node into two TUs; determining a TU partition for the PU partition type based on the residual tree structure and a desired level of partitioning in the residual tree structure; and using the TU partition in a transform operation in decoding the video content.

The following detailed description and accompanying drawings provide a more detailed understanding of the nature and advantages of particular embodiments.

### BRIEF DESCRIPTION OF THE DRAWINGS

FIG. 1 shows an example of a largest coding unit (LCU).
FIG. 2 shows an example of an LCU partition.
FIG. 3 shows a quadtree of the LCU partition shown in FIG. 2.
FIG. 4 shows an example of a CU partition of PUs
FIG 5 shows a PU partitioning of a set of transform units (TUs).
FIG. 6 shows an example of an RQT.
FIG. 7 depicts an example of a system for encoding and decoding video content according to one embodiment.
FIG. 8 depicts five possible PU partitions for a CU of 2Nx2N according to one embodiment.
FIG. 9 depicts a first example of possible PU partitions for a residual tree according to one embodiment.
FIG. 10 shows a second example for a residual tree structure according to one embodiment.
FIG. 11 shows a third example of a residual tree structure according to one embodiment.
FIG. 12 depicts a fourth example for possible PU partitions according to one embodiment.
FIG. 13 depicts a more detailed example of an encoder and a decoder to illustrate the signaling according to one embodiment.
FIG. 14 depicts a simplified flowchart of a method for determining a TU partition according to one embodiment.
FIG. 15 depicts a simplified flowchart for determining a TU partition at the decoder according to one embodiment.
FIG. 16A depicts an example of the encoder according to one embodiment.
FIG. 16B depicts an example of the decoder according to one embodiment.

### DETAILED DESCRIPTION

Described herein are techniques for a video compression system. In the following description, for purposes of explanation, numerous examples and specific details are set forth in order to provide a thorough understanding of particular embodiments. Particular embodiments as defined by the claims may include some or all of the features in these examples alone or in combination with other features described below, and may further include modifications and equivalents of the features and concepts described herein.

FIG. 7 depicts an example of a system 700 for encoding and decoding video content according to one embodiment. System 700 includes an encoder 702 and a decoder 704, both of which will be described in more detail below.

Encoder 702 and decoder 704 include a residual tree structure manager 706-1 and 706-2, respectively. Residual tree structure manager 706 uses a residual tree (RT) to determine possible transform unit (TU) partitions for a coding unit (CU). In one embodiment, the residual tree allows binary partitioning of a prediction unit (PU). Transform units, prediction units, and coding units may be units of video content that may be referred to by different nomenclature. The binary partitioning splits a PU into two TUs. In this case, the residual tree uses a binary branch split of a node instead of a branch split into four TUs, as was described with respect to the residual quad tree (RQT) in the background. Also, the residual tree may partition TUs in a quadrature split. For example, some TUs may be split into two TUs and some TUs may be split into four TUs.

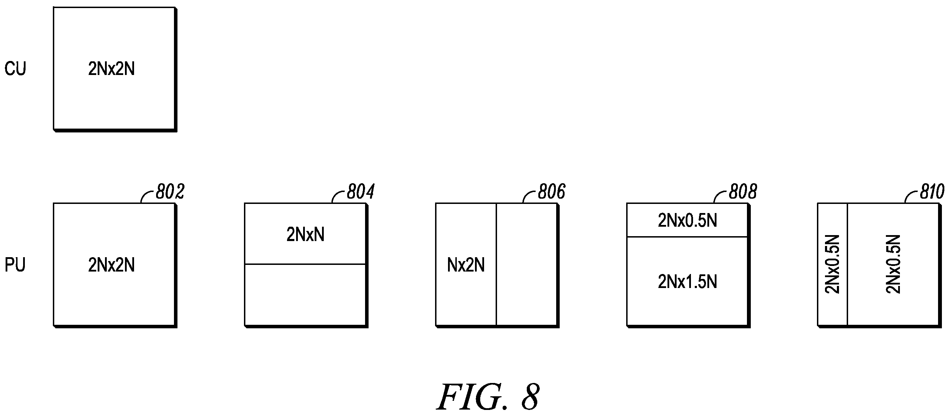

FIG. 8 depicts five possible PU partitions for a CU of 2Nx2N according to one embodiment. At 802, the PU is the same size as the CU. At 804, the CU is partitioned into 2 PUs of 2NxN. The CU is split horizontally into 2 rectangles. At 806, the CU is partitioned into 2 PUs of Nx2N. The CU in this case is partitioned vertically into 2 PUs. At 808, the CU is partitioned into a first PU of 2Nx0.5N and a second PU of 2Nx1.5N. In this case, the PUs are of a different size. At 810, the CU is partitioned into a first PU of 2Nx0.5N and a second PU of 2Nx1.5N. The PUs are of different sizes in this case also, however, the CU is vertically partitioned. Although these partitions are described, it will be understood that other partitions may be appreciated.

Residual tree structure manager 706 forms a residual tree structure of TUs based on the partitions shown in FIG. 8. Different examples will be described; however, other examples may be appreciated.

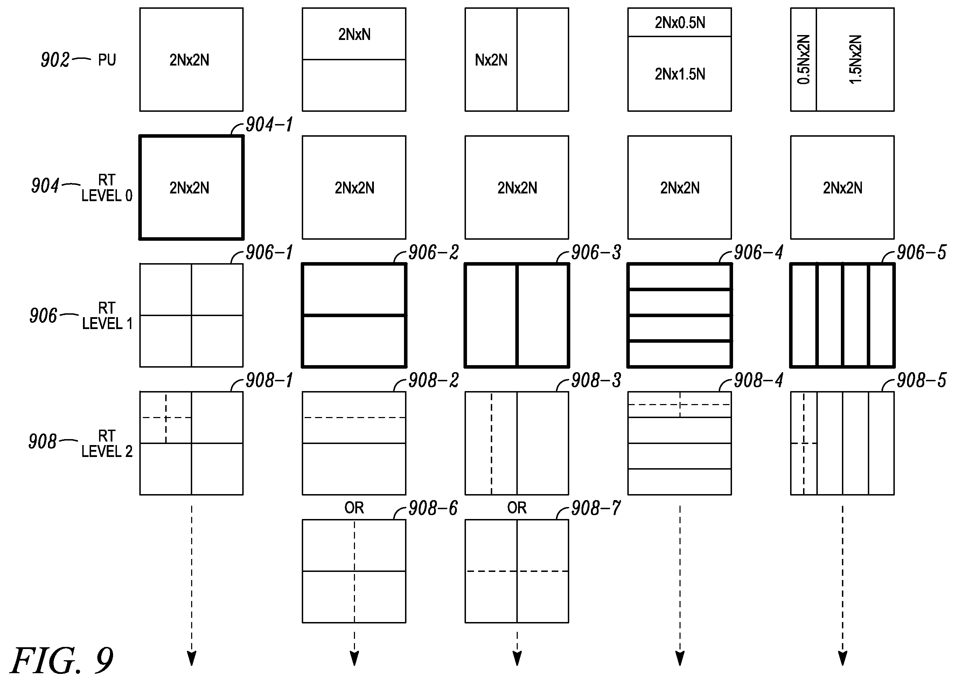

FIG. 9 depicts a first example of possible PU partitions for a residual tree according to one embodiment. At 902, the different possible PU partitions are shown. FIG. 9 shows different levels of the RT below the PU partitions. The level may be the amount of partitioning that is performed. For example, for each increase in level, a further partitioning is performed from the previous level. In one example, at 904, a level 0 partitioning of the PU is shown. In this case, all PUs start with a TU size of 2Nx2N.

At 906, a level 1 partitioning of the RT is shown. For the 2Nx2N PU, at 906-1, each node in level 0 is branched into 4 nodes, each representing a TU ofNxN.

At 906-2, for the 2NxN PU, each node at level 0 is branched into 2 nodes, each representing a TU of 2NxN. In this case, the 2Nx2N TU has been partitioned horizontally into 2 rectangular TUs. Accordingly, particular embodiments provide a binary branching of a node.

At 906-3, for the Nx2N PU, each node in level 0 is branched into 2 nodes, each representing a TU of Nx2N. In this case, the PU is partitioned vertically into 2 rectangular TUs. This is also a binary branching of a node.

At 906-4, for the 2Nx0.5N PU, each node at level 0 is branched into 4 nodes, each representing a TU of 2Nx0.5N. In this case, the 2Nx2N TU is partitioned horizontally into 4 TUs.

At 906-5, for the 0.5Nx2N PU, each node in level 0 is branched into 4 nodes, each representing a TU of 0.5Nx2N. In this case, the 2Nx2N TU is partitioned vertically into 4 rectangular TUs.

At 908, a level 2 partitioning of the residual tree is shown. At 908-1, for the 2Nx2N PU, each node in level 1 is branched into 4 nodes, each representing a TU of 0.5Nx0.5N. The dotted lines shown indicate the partitioning of 1 TU into 4 TUs. Each TU shown in 908-1 may be partitioned into 4 TUs.

At 908-2, for the 2NxN PU, each node in level 1 is branched into 2 nodes, each representing a TU of 2Nx0.5N (or NxN as shown at 908-6). As shown by the dotted line in 908-2, 1 TU has been split horizontally into 2 TUs. The other TU according to 906-2 may also be split in this way. In another embodiment, each TU may be split into 2 square TUs as shown in 908-6.

At 908-3, for the Nx2N PU, each node in level 1 is branched into 2 nodes, each representing a TU of 0.5Nx2N (or NxN as shown at 908-7). At 908-2, the dotted line shows a TU being vertically partitioned into 2 TUs. The other TU according to 906-3 may also be partitioned in the same manner. In another embodiment, at 908-7, a TU may be partitioned into 2 square TUs of NxN.

At 908-4, for the 2Nx0.5N PU, each node in level 1 is branched into 4 nodes, each representing a TU of Nx0.25N. As shown by the dotted lines, 1 TU is split into 4 TUs of Nx0.25N. The other TUs according to 906-4 may also be partitioned in the same manner.

At 908-5, for the 0.5Nx2N PU, each node in level 1 is branched into 4 nodes, each representing a TU of 0.25NxN. The dotted lines show a TU being partitioned into 4 0.25NxN TUs. The other TUs according to 906-5 may also be partitioned into 4 TUs in the same manner.

The partitioning may continue to other levels. For all 5 PU partitions, each node in the above level is branched into 4 nodes, each representing a TU with a parental TU size divided by 2, both horizontally and vertically.

In one example, residual tree structure manager 706 uses a default setting, such as a residual tree depth of 1, for determining the TU partition. For example, the default setting selects the 5 TU partitions that are shown in bold at 904-1, 906-2, 906-3, 906-4, and 906-5. In this case, the TU partition is set equal to the largest possible TU that can fit into all PUs within the current CUs. Specifically, the following may be used:
1. For the 2Nx2N PU, the TU partition at level 0 of the residual tree is used, and
2. For the 2NxN, Nx2N, 2Nx0.5N, or 0.5Nx2N PU, the TU partition at level 1 of the residual tree is used.
Particular embodiments may also use other default partitions.

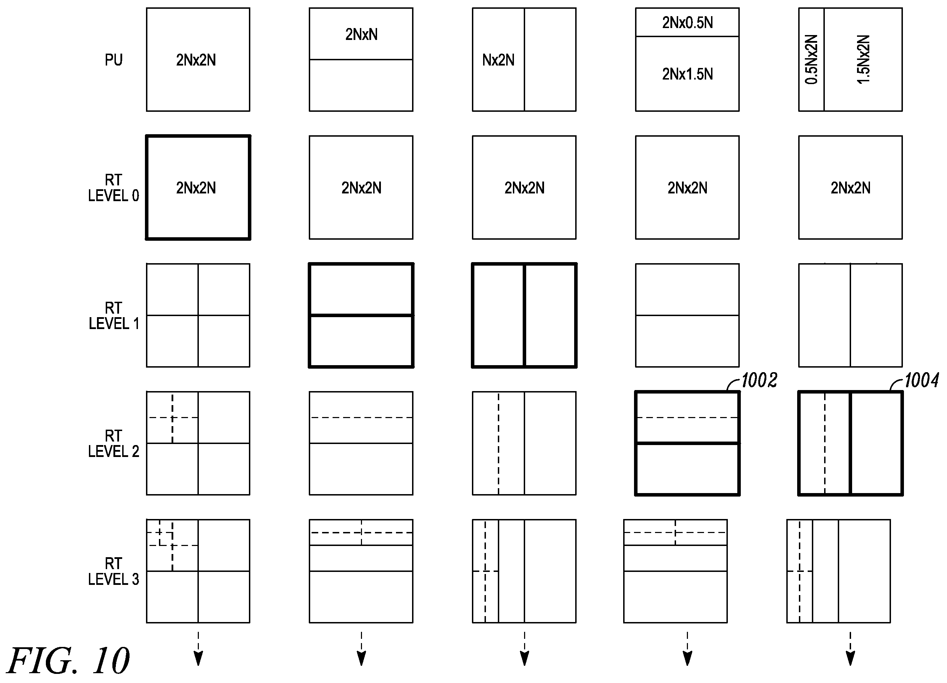

FIG. 10 shows a second example for a residual tree structure according to one embodiment. In this example, an additional level of binary partitioning for the 2Nx0.5N and 0.5Nx2N PUs is used. For example, at 1002, a TU of level 0 is partitioned horizontally into 2 TUs of 2Nx0.5N. Also, at 1004, a TU of level 0 is partitioned vertically into 2 TUs of 0.5Nx2N. The above 2 examples show a binary partitioning of a TU.

The following summarizes the partitioning for levels 0, 1, 2, 3, and other levels.
1. Level 0
   - All the five residual trees start with a TU of 2Nx2N.
2. Level 1
   - For PU 2Nx2N, each node in level 0 is branched into four nodes, each representing a TU of NxN.
   - For PU 2NxN, each node in level 0 is branched into two nodes, each representing a TU of 2NxN.
   - For PU Nx2N, each node in level 0 is branched into two nodes, each representing a TU of Nx2N.
   - For PU 2Nx0.5N, each node in level 0 is branched into two nodes, each representing a TU of 2NxN.
   - For PU 0.5Nx2N, each node in level 0 is branched into two nodes, each representing a TU of Nx2N.
3. Level 2
   - For PU 2Nx2N, each node in level 1 is branched into four nodes, each representing a TU of 0.5Nx0.5N.
   - For PU 2NxN, each node in level 1 is branched into two nodes, each representing a TU of 2Nx0.5N.
   - For PU Nx2N, each node in level 1 is branched into two nodes, each representing a TU of 0.5Nx2N.
   - For PU 2Nx0.5N, each node in level 1 is branched into two-nodes, each representing a TU of 2Nx0.5N.
   - For PU 0.5Nx2N, each node in level 1 is branched into two-nodes, each representing a TU of 0.5Nx2N.
4. Other levels
   - For all five PU partitions, each node in the above level is branched into four nodes, each representing a TU with the parental TU size divided by 2 both horizontally and vertically.

When the residual tree depth is set to a default value, such as 1, the following may be used:
1. For the 2Nx2N PU, the TU partition at level 0 of the residual tree is used.
2. For the 2NxN PU or Nx2N PU, the TU partition at level 1 of the residual tree is used.
3. For the 2Nx.05N PU or the 0.5Nx2N PU, the TU partition at level 2 of the residual tree with both level 1 nodes branched out is used.

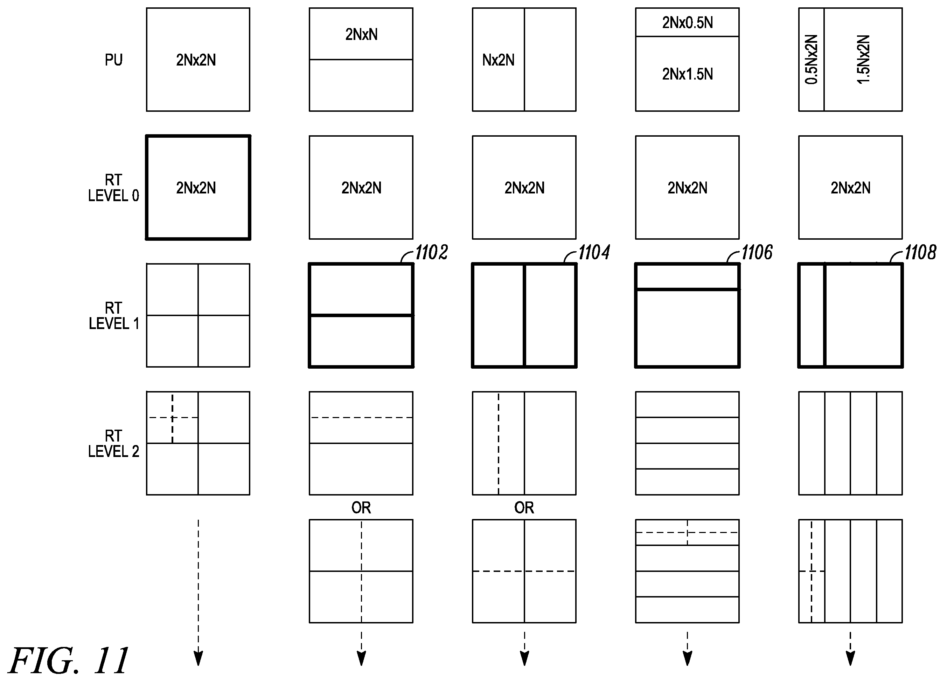

FIG. 11 shows a third example of a residual tree structure according to one embodiment. In this example, the TU size at level 1 is equal to the PU size except for the 2Nx2N PU type. For example, at 1102, for the 2NxN PU, each node in level 0 is branched into 2 nodes, each representing a TU of 2NxN. At 1104, for the Nx2N PU, each node at level 0 is branched into 2 nodes, each representing a TU of Nx2N. At 1106, for the 2Nx0.5N PU, each node in level 0 is branched into 2 nodes, one representing a TU of 2Nx0.5N and the other a TU of 2Nx1.5N. At 1108, for the 0.5Nx2N PU, each node in level 0 is branched into 2 nodes, one representing a TU of 0.5Nx2N and the other a TU of 1.5Nx2N. In those four cases, the residual tree partitions a TU using a binary partition. Also, the TU size equals the PU size.

The following summarizes the partitioning at levels 0, 1,2, and other levels:
1. Level 0
   - All the five residual trees start with a TU of 2Nx2N.
2. Level 1
   - For PU 2Nx2N, each node in level 0 is branched into four nodes, each representing a TU of NxN.
   - For PU 2NxN, each node in level 0 is branched into two nodes, each representing a TU of 2NxN.
   - For PU Nx2N, each node in level 0 is branched into two nodes, each representing a TU of Nx2N.
   - For PU 2Nx0.5N, each node in level 0 is branched into two nodes, one representing a TU of 2Nx0.5N and the other a TU of 2Nx1.5N.
   - For PU 0.5Nx2N, each node in level 0 is branched into two nodes, one representing a TU of 0.5Nx2N and the other a TU of 1.5Nx2N.
3. Level 2
   - For PU 2Nx2N, each node in level 1 is branched into four nodes, each representing a TU of 0.5Nx0.5N.
   - For PU 2NxN, each node in level 1 is branched into two nodes, each representing a TU of 2Nx0.5N (or NxN).
   - For PU Nx2N, each node in level 1 is branched into two nodes, each representing a TU of 0.5Nx2N (or NxN).
   - For PU 2Nx0.5N, the node of 2Nx1.5N in level 1 is branched into three nodes, each representing a TU of Nx0.5N.
   - For PU 0.5Nx2N, the node of 1.5Nx2N in level 1 is branched into three nodes, each representing a TU of 0.5NxN.
4. Other levels
   - For all five PU partitions, each node in the above level is branched into four nodes, each representing a TU with the parental TU size divided by 2 both horizontally and vertically.

Also, when the residual tree depth is set to a default value, such as 1, the following may be used:
1. For the 2Nx2N PU, the TU partition at level 0 of the residual tree is used.
2. For the 2NxN PU, Nx2N PU, 2Nx0.5N PU, or 0.5Nx2N PU, the TU partition at level 1 of the residual tree is used.

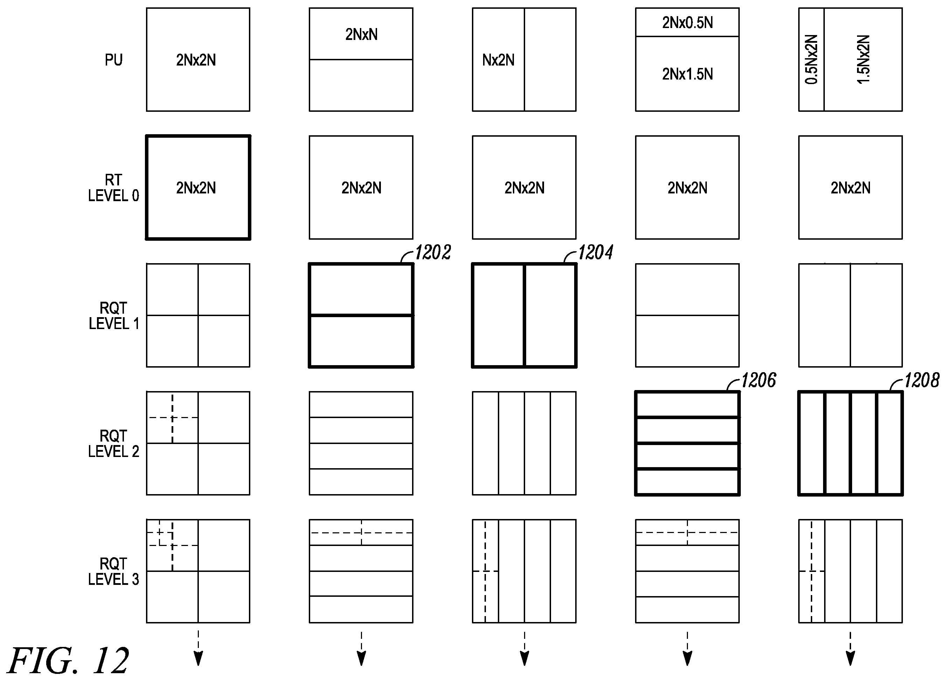

FIG. 12 depicts a fourth example for possible PU partitions according to one embodiment. In this example, the residual tree splits all of the nodes at high levels together. For example, binary partitions are shown at 1202, 1204, 1206, and 1208. At 1202, for the 2NxN PU, each node in level 0 is branched into 2 nodes, each representing a TU of 2NxN. At 1204, for the Nx2N PU, each node in level 0 is branched into 2 nodes, each representing a TU of Nx2N. At 1206, for the 2Nx0.5N PU, each of the 2 nodes in level 1 is branched into 2 nodes, each representing a TU of 2Nx0.5N. At 1208, for the 0.5Nx2N PU, each of the 2 nodes in level 1 is branched into 2 nodes, each representing a TU of 0.5Nx2N.

The following summarizes the partitioning at levels 0, 1,2, and other levels.
1. Level 0
   - All the five RT start with a TU of 2Nx2N.
2. Level 1
   - For PU 2Nx2N, each node in level 0 is branched into four nodes, each representing a TU of NxN.
   - For PU 2NxN, each node in level 0 is branched into two nodes, each representing a TU of 2NxN.
   - For PU Nx2N, each node in level 0 is branched into two nodes, each representing a TU of Nx2N.
   - For PU 2Nx0.5N, each node in level 0 is branched into two nodes, each representing a TU of 2NxN.
   - For PU 0.5Nx2N, each node in level 0 is branched into two nodes, each representing a TU of Nx2N.
3. Level 2
   - For PU 2Nx2N, each node in level 1 is branched into four nodes, each representing a TU of 0.5Nx0.5N.
   - For PU 2NxN, each of two nodes in level 1 is branched into two nodes, each representing a TU of 2Nx0.5N.
   - For PU Nx2N, each of two nodes in level 1 is branched into two nodes, each representing a TU of 0.5Nx2N.
   - For PU 2Nx0.5N, each of two nodes in level 1 is branched into two nodes, each representing a TU of 2Nx0.5N.
   - For PU 0.5Nx2N, each of two nodes in level 1 is branched into two nodes, each representing a TU of 0.5Nx2N.
4. Other levels
   - For all five PU partitions, each node in the above level is branched into four nodes, each representing a TU with the parental TU size divided by 2 both horizontally and vertically.

Also, when the depth of the residual tree is set to a default value, such as 1, the following may be used:
1. For the 2Nx2N PU, the TU partition at level 0 of the residual tree is used.
2. For the 2NxN PU or Nx2N PU, the TU partition at level 1 of the residual tree is used.
3. For the 2Nx0.5N PU or the 0.5Nx2N PU, the TU partition at level 2 of the residual tree with both level 1 nodes branched is used.

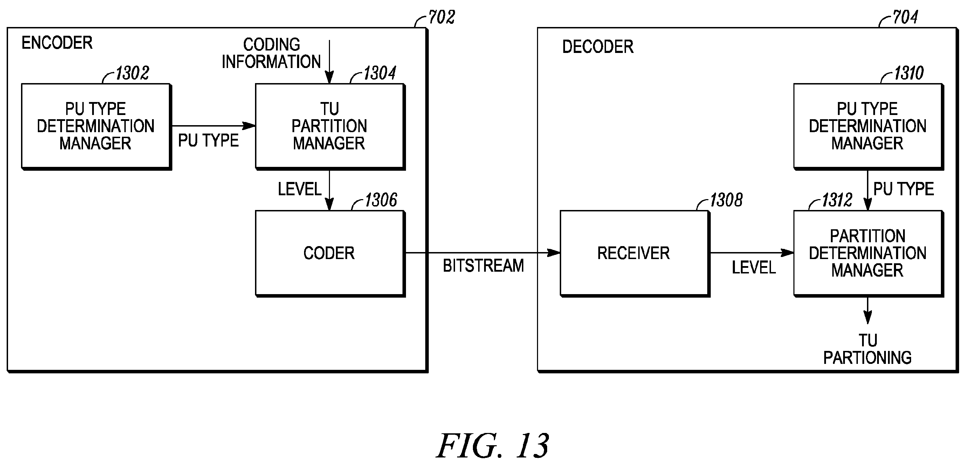

In one example, signaling between encoder 702 and decoder 704 is performed to indicate to decoder 704 which TU partition to use. FIG. 13 depicts a more detailed example of encoder 702 and decoder 704 to illustrate the signaling according to one embodiment. A PU type determination manager 1302 determines the PU partition, such as the PU partitions described above. In one example, PU type determination manager 1302 determines a PU partition of 2NxN and outputs it to a TU partition manager 1304.

A TU partition manager 1304 then determines which TU partitioning to use. For example, TU partition manager 1304 may analyze a prediction residual to select a TU partition to minimize coding cost for the CU. In another example, TU partition manager 1304 may receive coding information regarding the coding process of the video content. TU partition manager 1304 may then select which TU partition to use based on the coding information. In one example, TU partition manager 1304 analyzes motion information to determine the TU partition. For example, TU partition manager 1304 determines a TU partition that groups similar motion information in a TU. TU partition manager 1304 then outputs the level that represents the selected TU partition to a coder 1306. Coder 1306 codes the selected level in a bitstream that is sent to decoder 704. For example, level 0, 1,2, or another level may be coded in the bitstream.

A receiver 1308 in decoder 704 receives the bitstream. Receiver 1308 may determine the level that was coded in the bitstream. For example, a partition determination manager 1310 then determines the TU partitioning to apply to the PU. For example, a PU type determination manager 1310 determines the PU type of the current CU. Partition determination manager 1310 receives the PU type and then using the residual tree information sent from encoder 102, determines the TU partitioning to apply to the current CU. For example, if encoder 702 signaled level 1 and the PU is a 2NxN PU, then partition determination manager 1310 uses a TU partition of 2NxN.

In another embodiment, encoder 702 and decoder 704 may implicitly determine the TU partitioning. For example, if the default value is used where the residual tree depth is set to 1, then the default partitioning as described above with respect to FIGs. 9-12 may be used. For example, encoder 702 and decoder 704 may be programmed for one of the possible TU partitions described in FIGs. 9-12. When the default depth of 1 is used, then encoder 702 and decoder 704 can determine the PU type and automatically use the default TU partition that was described above.

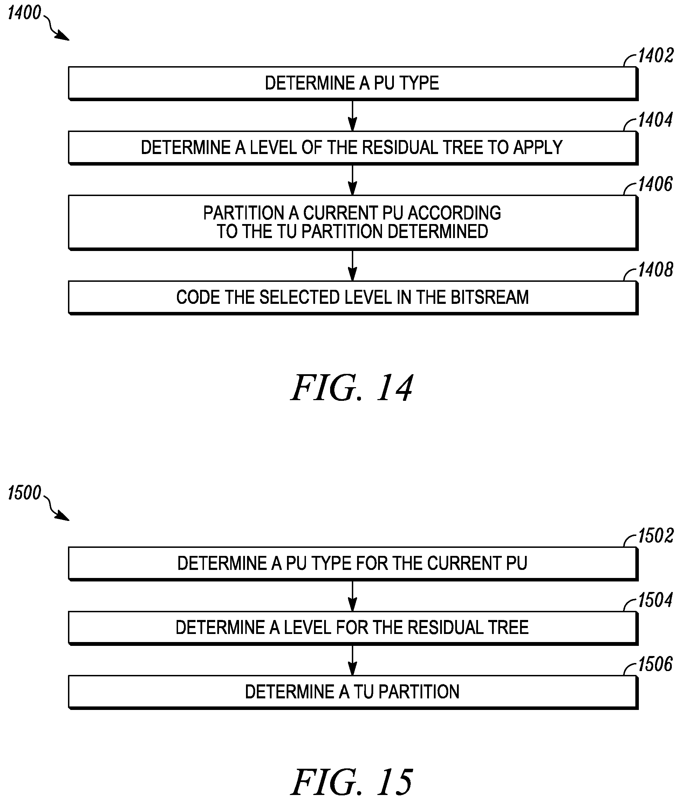

FIG. 14 depicts a simplified flowchart 1400 of a method for determining a TU partition according to one embodiment. At 1402, residual tree structure manager 706-1 determines a PU type. At 1404, residual tree structure manager 706-1 determines a level of the residual tree to apply. For example, residual tree structure manager 706-1 analyzes coding information for the video content being encoded to determine the residual tree and TU partition. At 1406, residual tree structure manager 706-1 partitions a current CU according to the TU partition determined. At 1408, residual tree structure manager 706 codes the selected level in the bitstream. Also, if encoder 702 and decoder 704 are determining the level implicitly, encoder 702 may not encode the level in the bitstream.

FIG. 15 depicts a simplified flowchart 1500 for determining a TU partition at decoder 704 according to one embodiment. At 1502, residual tree structure manager 706-2 determines a PU type for the current PU. At 1504, residual tree structure manager 706-2 determines a level for the residual tree. For example, the level may be signaled from encoder 702 or a default value may be used. At 1506, residual tree structure manager 706-2 determines a TU partition. For example, the level of the residual tree and the PU type is used to determine which TU partition to apply to the current PU.

Accordingly, particular embodiments provide a residual tree that allows a binary split of a node. This allows a TU to be split into 2 TUs instead of 4 TUs. This may allow a TU to be used that is more efficient for coding.

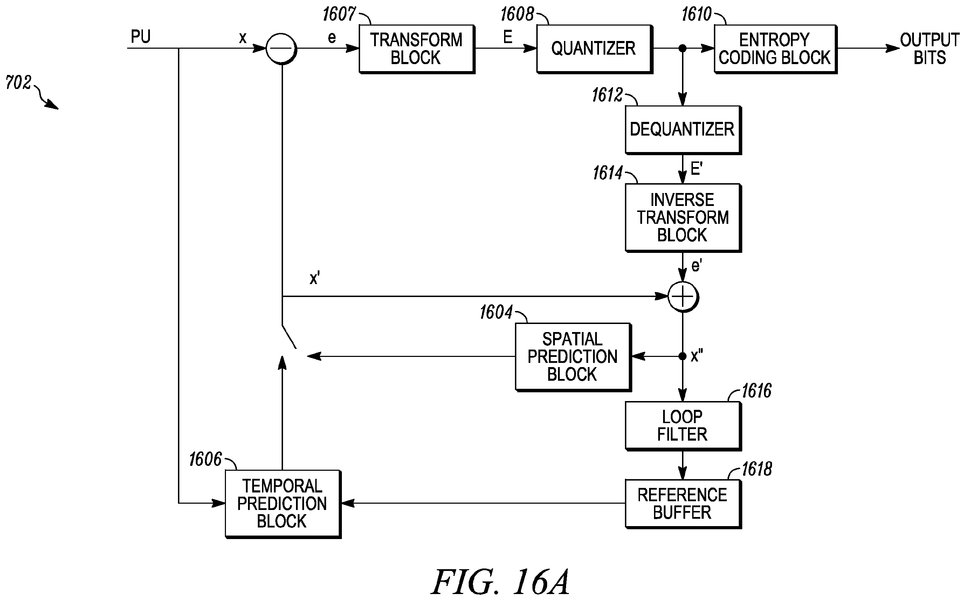

A general operation of an encoder and decoder will now be described. FIG. 16A depicts an example of encoder 702 according to one embodiment. It will be understood that variations on the encoding process described will be appreciated by a person skilled in the art based on the disclosure and teachings herein.

For a current PU, x, a prediction PU, x', is obtained through either spatial prediction or temporal prediction. The prediction PU is then subtracted from the current PU, resulting in a residual PU, e. A spatial prediction block 1604 may include different spatial prediction directions per PU, such as horizontal, vertical, 45-degree diagonal, 135-degree diagonal, DC (flat averaging), and planar.

A temporal prediction block 1606 performs temporal prediction through a motion estimation operation. The motion estimation operation searches for a best match prediction for the current PU over reference pictures. The best match prediction is described by a motion vector (MV) and associated reference picture (refIdx). The motion vector and associated reference picture are included in the coded bitstream.

Transform block 1607 performs a transform operation with the residual PU, e. Transform block 1607 receives the TU partition as described above to perform the transform operation. Transform block 1606 outputs the residual PU in a transform domain, E.

A quantizer 1608 then quantizes the transform coefficients of the residual PU, E. Quantizer 1608 converts the transform coefficients into a finite number of possible values. Entropy coding block 1610 entropy encodes the quantized coefficients, which results in final compression bits to be transmitted. Different entropy coding methods may be used, such as context-adaptive variable length coding (CAVLC) or context-adaptive binary arithmetic coding (CABAC).

Also, in a decoding process within encoder 702, a de-quantizer 1612 de-quantizes the quantized transform coefficients of the residual PU. De-quantizer 1612 then outputs the de-quantized transform coefficients of the residual PU, E'. An inverse transform block 1614 receives the de-quantized transform coefficients, which are then inverse transformed resulting in a reconstructed residual PU, e'. Inverse transform block 1614 receives the TU partition as described above to perform the transform operation. The reconstructed PU, e', is then added to the corresponding prediction, x', either spatial or temporal, to form the new reconstructed PU, x". A loop filter 1616 performs de-blocking on the reconstructed PU, x", to reduce blocking artifacts. Additionally, loop filter 1616 may perform a sample adaptive offset process after the completion of the de-blocking filter process for the decoded picture, which compensates for a pixel value offset between reconstructed pixels and original pixels. Also, loop filter 1606 may perform adaptive loop filtering over the reconstructed PU, which minimizes coding distortion between the input and output pictures. Additionally, if the reconstructed pictures are reference pictures, the reference pictures are stored in a reference buffer 1618 for future temporal prediction.

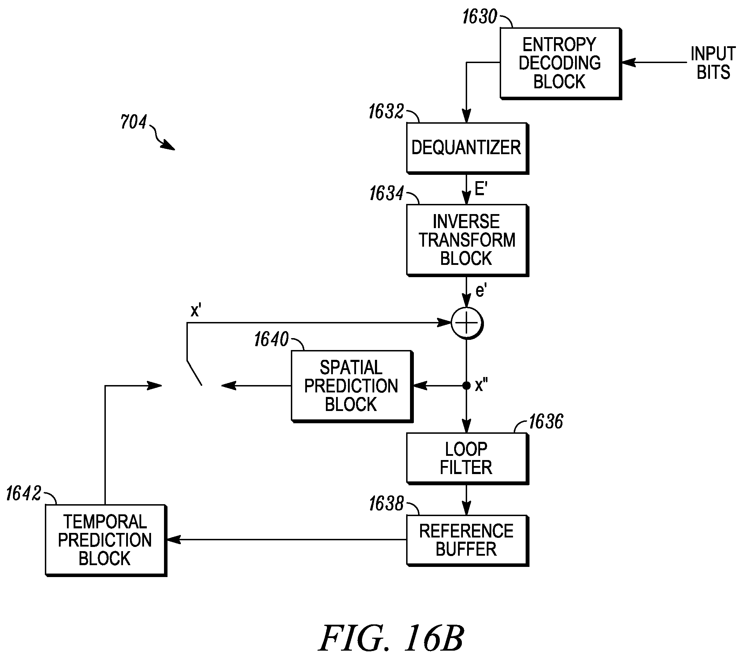

FIG. 16B depicts an example of decoder 704 according to one embodiment. It will be understood that variations on the decoding process described will be appreciated by a person skilled in the art based on the disclosure and teachings herein. Decoder 704 receives input bits from encoder 702 for encoded video content.

An entropy decoding block 1630 performs entropy decoding on the input bitstream to generate quantized transform coefficients of a residual PU. A de-quantizer 1632 de-quantizes the quantized transform coefficients of the residual PU. De-quantizer 1632 then outputs the de-quantized transform coefficients of the residual PU, E'. An inverse transform block 1634 receives the de-quantized transform coefficients, which are then inverse transformed resulting in a reconstructed residual PU, e'. Inverse transform block 1634 receives the TU partition as described above to perform the transform operation.

The reconstructed PU, e', is then added to the corresponding prediction, x', either spatial or temporal, to form the new reconstructed PU, x". A loop filter 1636 performs de-blocking on the reconstructed PU, x", to reduce blocking artifacts. Additionally, loop filter 1636 may perform a sample adaptive offset process after the completion of the de-blocking filter process for the decoded picture, which compensates for a pixel value offset between reconstructed pixels and original pixels. Also, loop filter 1636 may perform adaptive loop filtering over the reconstructed PU, which minimizes coding distortion between the input and output pictures. Additionally, if the reconstructed pictures are reference pictures, the reference pictures are stored in a reference buffer 1638 for future temporal prediction.

The prediction PU, x', is obtained through either spatial prediction or temporal prediction. A spatial prediction block 1640 may receive decoded spatial prediction directions per PU, such as horizontal, vertical, 45-degree diagonal, 135-degree diagonal, DC (flat averaging), and planar. The spatial prediction directions are used to determine the prediction PU, x'.

A temporal prediction block 1642 performs temporal prediction through a motion estimation operation. A decoded motion vector is used to determine the prediction PU, x'. Interpolation may be used in the motion estimation operation.

Particular embodiments may be implemented in a non-transitory computer-readable storage medium for use by or in connection with the instruction execution system, apparatus, system, or machine. The computer-readable storage medium contains instructions for controlling a computer system to perform a method described by particular embodiments. The instructions, when executed by one or more computer processors, may be operable to perform that which is described in particular embodiments.

As used in the description herein and throughout the claims that follow, "a", "an", and "the" includes plural references unless the context clearly dictates otherwise. Also, as used in the description herein and throughout the claims that follow, the meaning of "in" includes "in" and "on" unless the context clearly dictates otherwise.

The above description illustrates various embodiments along with examples of how aspects of particular embodiments may be implemented. The above examples and embodiments should not be deemed to be the only embodiments, and are presented to illustrate the flexibility and advantages of particular embodiments as defined by the following claims. Based on the above disclosure and the following claims, other arrangements, embodiments, implementations and equivalents may be employed without departing from the scope hereof as defined by the claims.

## Claims

1. A method comprising:
receiving a prediction unit, PU, for a coding unit, CU, of video content, wherein the PU is partitionable into a plurality of PU partition types;
determining, by a computing device, a PU partition type for the PU;
determining, by the computing device, a residual tree structure based on the PU partition type for partitioning of the CU into transform units, TUs, the residual tree including a binary partition of a node into two TUs;
determining, by the computing device, a TU partition for the PU partition type based on the residual tree structure and a desired level of partitioning in the residual tree structure;
using the TU partition in a transform operation; and
signaling the desired level from an encoder to a decoder.

2. The method of claim 1, wherein:
for a 2NxN PU partition type, a level in the residual tree structure partitions a 2Nx2N node into two nodes of 2NxN, and
for a Nx2N PU partition type, a level in the residual tree structure partitions a 2Nx2N node into two nodes of Nx2N.

3. The method of claim 1, wherein:
for a 2Nx0.5N PU partition type, a level in the residual tree structure partitions a 2NxN node into two nodes of 2Nx0.5N, and
for a 0.5Nx2N PU partition type, a level in the residual tree structure partitions a Nx2N node into two nodes of 0.5Nx2N.

4. The method of claim 1, wherein:
for a 2Nx0.5N PU partition type, a level in the residual tree structure partitions a 2Nx2N node into a first node of 2Nx0.5N and a second node of 2Nx1.5N, and
for a 0.5Nx2N PU partition type, a level in the residual tree structure partitions a 2Nx2N node into a first node of 0.5Nx2N and a second node of 1.5Nx0.5N.

5. The method of claim 1, wherein when a default depth of the residual tree is used, the desired level of the residual tree for each PU partition type is fixed.

6. The method of claim 1, wherein the residual tree structure includes nodes that branch out with the binary partition of TUs and a quadtree partition of TUs.

7. An apparatus comprising:
one or more computer processors; and
a non-transitory computer-readable storage medium comprising instructions, that when executed by the one or more computer processors, control the one or more computer processors to be configured for:
receiving a prediction unit, PU, for a coding unit CU, of video content, wherein the PU is partitionable into a plurality of PU partition types;
determining a PU partition type for the PU;
determining a residual tree structure based on the PU partition type for partitioning of the CU into transform units, TUs, the residual tree including a binary partition of a node into two TUs;
determining a TU partition for the PU partition type based on the residual tree structure and a desired level of partitioning in the residual tree structure; and
using the TU partition in a transform operation,
wherein when a default depth of the residual tree is used, the desired level of the residual tree for each PU partition type is fixed.

8. The apparatus of claim 7, wherein:
for a 2NxN PU partition type, a level in the residual tree structure partitions a 2Nx2N node into two nodes of 2NxN, and
for a Nx2N PU partition type, a level in the residual tree structure partitions a 2Nx2N node into two nodes of Nx2N.

9. The apparatus of claim 7, wherein:
for a 2Nx0.5N PU partition type, a level in the residual tree structure partitions a 2NxN node into two nodes of 2Nx0.5N, and
for a 0.5Nx2N PU partition type, a level in the residual tree structure partitions a Nx2N node into two nodes of 0.5Nx2N.

10. The apparatus of claim 7, wherein:
for a 2Nx0.5N PU partition type, a level in the residual tree structure partitions a 2Nx2N node into a first node of 2Nx0.5N and a second node of 2Nx1.5N, and
for a 0.5Nx2N PU partition type, a level in the residual tree structure partitions a 2Nx2N node into a first node of 0.5Nx2N and a second node of 1.5Nx0.5N.

11. The apparatus of claim 7, wherein the residual tree structure includes nodes that branch out with the binary partition of TUs and a quadtree partition of TUs.

12. A method for decoding video content, the method comprising:
receiving a bitstream of encoded video content;
determining, by a computing device, a prediction unit, PU, partition type for a PU for a coding unit, CU, of the video content, wherein the PU is partitionable into a plurality of PU partition types;
determining, by the computing device, a residual tree structure based on the PU partition type for partitioning of the CU into transform units, TUs, the residual tree including a binary partition of a node into two TUs;
determining, by the computing device, a TU partition for the PU partition type based on the residual tree structure and a desired level of partitioning in the residual tree structure, wherein determining the TU partition comprises receiving the desired level from an encoder; and
using the TU partition in a transform operation in decoding the video content.

13. The method of claim 12, wherein:
for a 2NxN PU partition type, a level in the residual tree structure partitions a 2Nx2N node into two nodes of 2NxN, and
for a Nx2N PU partition type, a level in the residual tree structure partitions a 2Nx2N node into two nodes of Nx2N.

14. The method of claim 12, wherein:
for a 2Nx0.5N PU partition type, a level in the residual tree structure partitions a 2NxN node into two nodes of 2Nx0.5N, and
for a 0.5Nx2N PU partition type, a level in the residual tree structure partitions a Nx2N node into two nodes of 0.5Nx2N.

15. The method of claim 12, wherein:
for a 2Nx0.5N PU partition type, a level in the residual tree structure partitions a 2Nx2N node into a first node of 2Nx0.5N and a second node of 2Nx1.5N, and
for a 0.5Nx2N PU partition type, a level in the residual tree structure partitions a 2Nx2N node into a first node of 0.5Nx2N and a second node of 1.5Nx0.5N.

## Patentansprüche

1. Verfahren, umfassend:
Empfangen einer Vorhersageeinheit PU für eine Codiereinheit CU von Videoinhalt, wobei die PU in mehrere PU-Partitionsarten partitionierbar ist;
Bestimmen eines PU-Partitionstyps für die PU durch eine Computervorrichtung;
Bestimmen einer restlichen Baumstruktur durch die Computervorrichtung basierend auf dem PU-Partitionstyp zum Partitionieren von der CU in Umwandlungseinheiten TUs, wobei der restliche Baum eine binäre Partition eines Knotens in zwei TUs umfasst;
Bestimmen einer TU-Partition für den PU-Partitionstyp durch die Computervorrichtung basierend auf der restlichen Baumstruktur und einer gewünschten Partitionierungsstufe in der restlichen Baumstruktur;
Verwenden der TU-Partition in einer Umwandlungsoperation;
und Signalisieren der gewünschten Stufe von einem Encoder an einen Decoder.

2. Verfahren nach Anspruch 1, wobei:
für einen 2NxN-PU-Partitionstyp eine Stufe in der restlichen Baumstruktur einen 2Nx2N-Knoten in zwei Knoten von 2NxN partitioniert und
für einen Nx2N-PU-Partitionstyp eine Stufe in der restlichen Baumstruktur einen 2Nx2N-Knoten in zwei Knoten von Nx2N partitioniert.

3. Verfahren nach Anspruch 1, wobei:
für einen 2Nx0.5N-PU-Partitionstyp eine Stufe in der restlichen Baumstruktur einen 2NxN-Knoten in zwei Knoten von 2Nx0.5N partitioniert und
für einen 0.5Nx2N-PU-Partitionstyp eine Stufe in der restlichen Baumstruktur einen Nx2N-Knoten in zwei Knoten von 0.5Nx2N partitioniert.

4. Verfahren nach Anspruch 1, wobei:
für einen 2Nx0.5N-PU-Partitionstyp eine Stufe in der restlichen Baumstruktur einen 2Nx2N-Knoten in einen ersten Knoten von 2Nx0.5N und einen zweiten Knoten von 2Nx1.5N partitioniert und
für einen 0.5Nx2N-PU-Partitionstyp eine Stufe in der restlichen Baumstruktur einen 2Nx2N-Knoten in einen ersten Knoten von 0.5Nx2N und einen zweiten Knoten von 1.5Nx0.5N partitioniert.

5. Verfahren nach Anspruch 1, wobei, wenn eine Standardtiefe des restlichen Baums verwendet wird, die gewünschte Stufe des restlichen Baums für jeden PU-Partitionstyp fest ist.

6. Verfahren nach Anspruch 1, wobei die restliche Baumstruktur Knoten umfasst, die sich mit der binären Partition von TUs und einer Viererbaumpartition von TUs verzweigen.

7. Vorrichtung, umfassend:
einen oder mehrere Computerprozessoren; und
ein nicht flüchtiges computerlesbares Speichermedium, das Befehle umfasst, die bei Ausführung durch den einen oder die mehreren Computerprozessoren den einen oder die mehreren Computerprozessoren steuern, konfiguriert zu sein für:
Empfangen einer Vorhersageeinheit PU für eine Codiereinheit CU von Videoinhalt, wobei die PU in mehrere PU-Partitionsarten partitionierbar ist;
Bestimmen eines PU-Partitionstyps für die PU;
Bestimmen einer restlichen Baumstruktur basierend auf dem PU-Partitionstyp zum Partitionieren der CU in Umwandlungseinheiten TUs, wobei der restliche Baum eine binäre Partition eines Knotens in zwei TUs umfasst;
Bestimmen einer TU-Partition für den PU-Partitionstyp basierend auf der restlichen Baumstruktur und einer gewünschten Partitionierungsstufe in der restlichen Baumstruktur; und
Verwenden der TU-Partition in einer Umwandlungsoperation, wobei, wenn eine Standardtiefe des restlichen Baums verwendet wird, die gewünschte Stufe des restlichen Baums für jeden PU-Partitionstyp fest ist.

8. Vorrichtung nach Anspruch 7, wobei:
für einen 2NxN-PU-Partitionstyp eine Stufe in der restlichen Baumstruktur einen 2Nx2N-Knoten in zwei Knoten von 2NxN partitioniert und
für einen Nx2N-PU-Partitionstyp eine Stufe in der restlichen Baumstruktur einen 2Nx2N-Knoten in zwei Knoten von Nx2N partitioniert.

9. Vorrichtung nach Anspruch 7, wobei:
für einen 2Nx0.5N-PU-Partitionstyp eine Stufe in der restlichen Baumstruktur einen 2NxN-Knoten in zwei Knoten von 2Nx0.5N partitioniert und
für einen 0.5Nx2N-PU-Partitionstyp eine Stufe in der restlichen Baumstruktur einen Nx2N-Knoten in zwei Knoten von 0.5Nx2N partitioniert.

10. Vorrichtung nach Anspruch 7, wobei:
für einen 2Nx0.5N-PU-Partitionstyp eine Stufe in der restlichen Baumstruktur einen 2Nx2N-Knoten in einen ersten Knoten von 2Nx0.5N und einen zweiten Knoten von 2Nx1.5N partitioniert und
für einen 0.5Nx2N-PU-Partitionstyp eine Stufe in der restlichen Baumstruktur einen 2Nx2N-Knoten in einen ersten Knoten von 0.5Nx2N und einen zweiten Knoten von 1.5Nx0.5N partitioniert.

11. Vorrichtung nach Anspruch 7, wobei die restliche Baumstruktur Knoten umfasst, die sich mit der binären Partition von TUs und einer Viererbaumpartition von TUs verzweigen.

12. Verfahren zum Decodieren von Videoinhalt, wobei das Verfahren umfasst:
Empfangen eines Bitstroms von codiertem Videoinhalt;
Bestimmen einer Vorhersageeinheit PU eines Partitionstyps für eine PU für eine Codiereinheit CU von Videoinhalt durch eine Computervorrichtung, wobei die PU in mehrere PU-Partitionstypen partitionierbar ist;
Bestimmen einer restlichen Baumstruktur durch die Computervorrichtung basierend auf dem PU-Partitionstyp zum Partitionieren der CU in Umwandlungseinheiten TUs, wobei der restliche Baum eine binäre Partition eines Knotens in zwei TUs umfasst;
Bestimmen einer TU-Partition für den PU-Partitionstyp durch die Computervorrichtung basierend auf der restlichen Baumstruktur und einer gewünschten Partitionierungsstufe in der restlichen Baumstruktur, wobei das Bestimmen der TU-Partition das Empfangen der gewünschten Stufe von einem Encoder umfasst; und
Verwenden der TU-Partition in einer Umwandlungsoperation beim Decodieren des Videoinhalts.

13. Verfahren nach Anspruch 12, wobei:
für einen 2NxN-PU-Partitionstyp eine Stufe in der restlichen Baumstruktur einen 2Nx2N-Knoten in zwei Knoten von 2NxN partitioniert und
für einen Nx2N-PU-Partitionstyp eine Stufe in der restlichen Baumstruktur einen 2Nx2N-Knoten in zwei Knoten von Nx2N partitioniert.

14. Verfahren nach Anspruch 12, wobei:
für einen 2Nx0.5N-PU-Partitionstyp eine Stufe in der restlichen Baumstruktur einen 2NxN-Knoten in zwei Knoten von 2Nx0.5N partitioniert und
für einen 0.5Nx2N-PU-Partitionstyp eine Stufe in der restlichen Baumstruktur einen Nx2N-Knoten in zwei Knoten von 0.5Nx2N partitioniert.

15. Verfahren nach Anspruch 12, wobei:
für einen 2Nx0.5N-PU-Partitionstyp eine Stufe in der restlichen Baumstruktur einen 2Nx2N-Knoten in einen ersten Knoten von 2Nx0.5N und einen zweiten Knoten von 2Nx1.5N partitioniert und
für einen 0.5Nx2N-PU-Partitionstyp eine Stufe in der restlichen Baumstruktur einen 2Nx2N-Knoten in einen ersten Knoten von 0.5Nx2N und einen zweiten Knoten von 1.5Nx0.5N partitioniert.

## Revendications

1. Procédé comprenant :
la réception d'une unité de prédiction, UP, pour une unité de codage, UC, de contenu vidéo, où l'UP est divisible en une pluralité de types de partitions d'UP ;
la détermination, par un dispositif informatique, d'un type de partition UP pour l'UP ;
la détermination, par le dispositif informatique, d'une structure arborescente résiduelle sur la base du type de partition UP pour le partitionnement de l'UC en unités de transformation, UT, l'arborescence résiduelle incluant une partition binaire d'un noeud en deux UT ;
la détermination, par le dispositif informatique, d'une partition UT pour le type de partition UP sur la base de la structure arborescente résiduelle et d'un niveau souhaité de partitionnement dans la structure arborescente résiduelle ;
l'utilisation de la partition UT dans une opération de transformation ; et la signalisation du niveau souhaité d'un codeur à un décodeur.

2. Procédé selon la revendication 1, dans lequel :
pour un type de partition UP de 2NxN, un niveau dans la structure arborescente résiduelle partitionne un noeud de 2Nx2N en deux noeuds de 2NxN, et
pour un type de partition UP de Nx2N, un niveau dans la structure arborescente résiduelle partitionne un noeud de 2Nx2N en deux noeuds de Nx2N.

3. Procédé selon la revendication 1, dans lequel :
pour un type de partition UP de 2Nx0,5N, un niveau dans la structure arborescente résiduelle partitionne un noeud de 2NxN en deux noeuds de 2Nx0,5N et
pour un type de partition UP de 0,5Nx2N, un niveau dans la structure arborescente résiduelle partitionne un noeud de Nx2N en deux noeuds de 0,5Nx2N.

4. Procédé selon la revendication 1, dans lequel :
pour un type de partition UP de 2Nx0,5N, un niveau dans la structure arborescente résiduelle partitionne un noeud de 2Nx2N en un premier noeud de 2Nx0,5N et un second noeud de 2Nx1,5N et
pour un type de partition UP de 0,5Nx2N, un niveau dans la structure arborescente résiduelle partitionne un noeud de 2Nx2N en un premier noeud de 0,5Nx2N et un second noeud de 1,5Nx0,5N.

5. Procédé selon la revendication 1, dans lequel, lorsqu'une profondeur par défaut de l'arborescence résiduelle est utilisée, le niveau souhaité de l'arborescence résiduelle pour chaque type de partition UP est fixe.

6. Procédé selon la revendication 1, dans lequel la structure arborescente résiduelle comprend des noeuds qui se ramifient avec la partition binaire d'UT et une quadripartition d'UT.

7. Appareil comprenant :
un ou plusieurs processeurs informatiques ; et
un support de stockage non transitoire lisible par ordinateur comprenant des instructions qui, lorsqu'elles sont exécutées par l'un ou plusieurs processeurs informatiques, contrôlent le ou les processeurs informatiques à configurer pour :
la réception d'une unité de prédiction, UP, pour une unité de codage UC, de contenu vidéo, où l'UP est divisible en une pluralité de types de partitions UP ;
la détermination d'un type de partition UP pour l'UP ;
la détermination d'une structure arborescente résiduelle sur la base du type de partition UP pour le partitionnement de l'UC dans les unités de transformation, UT, l'arborescence résiduelle comprenant une partition binaire d'un noeud en deux UT ;
la détermination d'une partition UT pour le type de partition UP sur la base de la structure arborescente résiduelle et d'un niveau de partitionnement souhaité dans la structure arborescente résiduelle ; et
l'utilisation de la partition UT dans une opération de transformation,
dans lequel, lorsqu'une profondeur par défaut de l'arborescence résiduelle est utilisée, le niveau souhaité de l'arborescence résiduelle pour chaque type de partition UP est fixe.

8. Appareil selon la revendication 7, dans lequel :
pour un type de partition UP de 2NxN, un niveau dans la structure arborescente résiduelle partitionne un noeud de 2Nx2N en deux noeuds de 2NxN, et
pour un type de partition UP de Nx2N, un niveau dans la structure arborescente résiduelle partitionne un noeud de 2Nx2N en deux noeuds de Nx2N.

9. Appareil selon la revendication 7, dans lequel:
pour un type de partition UP de 2Nx0,5N, un niveau dans la structure arborescente résiduelle partitionne un noeud de 2NxN en deux noeuds de 2Nx0,5N, et
pour un type de partition UP de 0,5Nx2N, un niveau dans la structure arborescente résiduelle partitionne un noeud de Nx2N en deux noeuds de 0,5Nx2N.

10. Appareil selon la revendication 7, dans lequel :
pour un type de partition UP de 2Nx0,5N, un niveau dans la structure arborescente résiduelle partitionne un noeud de 2Nx2N dans un premier noeud de 2Nx0,5N et un second noeud de 2Nx1,5N, et
pour un type de partition UP de 0,5Nx2N, un niveau dans l'arborescence résiduelle partitionne un noeud de 2Nx2N dans un premier noeud de 0,5Nx2N et un second noeud de 1,5Nx0,5N.

11. Appareil selon la revendication 7, dans lequel la structure arborescente résiduelle comprend des noeuds qui se ramifient avec la partition binaire d'UT et une quadripartition d'UT.

12. Procédé de décodage de contenu vidéo, le procédé comprenant :
la réception d'un flux binaire de contenu vidéo codé ;
la détermination, par un dispositif informatique, d'une unité de prédiction, UP, un type de partition pour une UP pour une unité de codage, UC, du contenu vidéo, où l'UP est divisible en une pluralité de types de partitions UP ;
la détermination, par le dispositif informatique, d'une structure arborescente résiduelle sur la base du type de partition UP pour le partitionnement de l'UC en unités de transformation, UT, l'arborescence résiduelle incluant une partition binaire d'un noeud en deux UT ;
la détermination, par le dispositif informatique, d'une partition UT pour le type de partition UP sur la base de la structure arborescente résiduelle et d'un niveau souhaité de partitionnement de la structure arborescente résiduelle, où la détermination de la partition UT comprend la réception du niveau souhaité d'un codeur ; et
l'utilisation de la partition UT dans une opération de transformation dans le décodage du contenu vidéo.

13. Procédé selon la revendication 12, dans lequel :
pour un type de partition UP de 2NxN, un niveau dans la structure arborescente résiduelle partitionne un noeud de 2Nx2N en deux noeuds de 2NxN, et
pour un type de partition UP de Nx2N, un niveau dans la structure arborescente résiduelle partitionne un noeud de 2Nx2N en deux noeuds de Nx2N.

14. Procédé selon la revendication 12, dans lequel :
pour un type de partition UP de 2Nx0,5N, un niveau dans la structure arborescente résiduelle partitionne un noeud de 2NxN en deux noeuds de 2Nx0,5N, et
pour un type de partition UP de 0,5Nx2N, un niveau dans la structure arborescente résiduelle partitionne un noeud de Nx2N en deux noeuds de 0,5Nx2N.

15. Procédé selon la revendication 12, dans lequel :
pour un type de partition UP de 2Nx0,5N, un niveau dans la structure arborescente résiduelle partitionne un noeud de 2Nx2N dans un premier noeud de 2Nx0,5N et un second noeud de 2Nx1,5N, et
pour un type de partition UP de 0,5Nx2N, un niveau dans la structure arborescente résiduelle partitionne un noeud de 2Nx2N dans un premier noeud de 0,5Nx2N et un second noeud de 1,5Nx0,5N.
